# EUROPEAN PATENT SPECIFICATION

(11) **EP 3 972 372 B1**
(45) Date of publication and mention of the grant of the patent: **20.08.2025**
(21) Application number: 20821948.5
(22) Date of filing: 12.06.2020
(51) Int. Cl.: H04W 72/23, H04W 74/0833, H04W 72/21, H04W 72/51

(54) **METHODS FOR PROVIDING UPLINK GRANT, BASE STATIONS, COMPUTER READABLE STORAGE MEDIA AND DEVICES**
VERFAHREN ZUR BEREITSTELLUNG VON UPLINK-BERECHTIGUNGEN, BASISSTATIONEN, COMPUTERLESBARE SPEICHERMEDIEN UND VORRICHTUNGEN
PROCÉDÉS DE FOURNITURE D'UNE AUTORISATION DE LIAISON MONTANTE, STATIONS DE BASE, SUPPORTS DE STOCKAGE LISIBLE PAR ORDINATEUR ET DISPOSITIFS

(30) Priority: 13.06.2019 CN 201910509200
(43) Date of publication of application: 23.03.2022
(73) Proprietor: ZTE Corporation, Shenzhen, Guangdong 518057 (CN)
(72) Inventor: XIAO, Rencai, Shenzhen, Guangdong 518057 (CN)
(74) Representative: Canzler & Bergmeier Patentanwälte Partnerschaft mbB
(86) International application number: PCT/CN2020/095785
(87) International publication number: WO 2020/249074

(56) References cited:
- CN-A- 107 231 686
- CN-A- 108 901 076
- CN-A- 109 088 704
- CN-A- 109 803 398
- US-A1- 2018 248 671
- HUAWEI ET AL: "Uplink latency reduction for synchronized UEs", vol. RAN WG2, no. Beijing, China; 20150824 - 20150828, 23 August 2015 (2015-08-23), XP051004102, Retrieved from the Internet <URL:http://www.3gpp.org/ftp/Meetings_3GPP_SYNC/RAN2/Docs/> [retrieved on 20150823]
- ERICSSON: "R2-1713057", [99BIS#53][MTC/NB-IOT] EDT INDICATION VIA PRACH, 17 November 2017 (2017-11-17), XP051371886, DOI: 20200827010255A

## Description

### TECHNICALFIELD

The present disclosure relates to, but is not limited to, the technologies of Narrow Band Internet of Things, and particularly to methods for providing an uplink grant, base stations, computer-readable storage media and devices.

### BACKGROUND

The Narrow Band Internet of Things (NB-IoT) is an emerging technology with low power consumption, wide coverage, and support for mass connection, in which a bandwidth of 180K can be directly deployed in a Global System for Mobile Communications (GSM) network or a Long Term Evolution (LTE) network, thereby reducing the deployment cost and facilitating smooth upgrade. Since the system bandwidth of NB-IoT is only 180K, efficiently utilization of air interface resources in NB-IoT is of particular importance.

The Physical Uplink Control Channel (PUCCH) is canceled in the NB-IoT system. As a result, when a terminal needs to transmit uplink data, it needs to firstly acquire an uplink grant by initiating random access. One random access process will occupy a Narrowband Physical Random Access Channel (NPRACH), a Narrowband Physical Downlink Shared Channel (NPDSCH) for transmitting a Random Access Response (RAR), and a Narrowband Physical Uplink Shared Channel (NPUSCH) for transmitting a Data Volume (DV). Apparently, in an environment with a large number of terminals, this manner of acquiring an uplink grant through an access process will occupy a great deal of air interface resources.

In the related art, there may be a large amount of burst small packet data that needs to be transmitted in an NB-IOT system. For example, a wristband service may trigger a large amount of small packet data intensively. In this scenario, a terminal typically acquires an uplink grant by triggering multiple Scheduling Requests (SRs). In an environment with many terminals, this manner of acquiring a grant through SRs will also occupy a great deal of air interface resources.

The 3rd Generation Partnership Project Release 15 (3GPP R15) protocol supplements that: a terminal can report whether uplink data needs to be transmitted through a Physical Random Access Channel (PRACH), but this manner also occupies NPRACH resources; the R15 protocol also proposes that SR information can be carried in downlink Hybrid Automatic Repeat reQuest (HARQ) resources, but this manner is premised on first obtaining a downlink grant. In addition, the R15 protocol further supports transmission of SR by Semi-Persistent Scheduling (SPS), but this manner requires pre-reserved resources for the terminal, and in practice, when there are a great number of terminals, it may not be possible to supply many resources for the terminals.

CN109088704A discloses a narrowband Internet of Things based uplink resource allocation method which includes determining whether a terminal needs to send uplink data and carrying out uplink pre-authorization scheduling processing.

3GPP R2-153374: "Uplink latency reduction for synchronized UEs" by Huawei, HiSilicon, 3GPP TSG-RAN WG2 Meeting #91, August 24-28, 2015, proposes the use of a piggybacked uplink grant in a downlink packet.

In summary, the schemes in the related art for providing an uplink grant either are difficult to implement or occupy a large amount of air interface resources, thereby reducing the utilization rate of air interface resources.

### SUMMARY

The invention provides methods for providing an uplink grant, base stations, computer-readable storage media and devices, which can provides an uplink grant in a simple manner and reduce required air interface resources. The invention is defined by the appended claims.

As defined by claim 1, the invention provides a method for providing an uplink grant, including: determining, by a base station, that a terminal needs to transmit uplink data; and assigning, by the base station, an uplink grant to the terminal before the next time point at which a Narrowband Physical Random Access Channel, NPRACH, is accessed; wherein information on a time point at which the NPRACH is accessed is contained in a NPRACH parameter configured for the base station by a network management system. A preferred embodiment of the method of claim 1 is defined by claim 2.

Furthermore, as defined by claim 3, the invention provides another method for providing an uplink grant, including: determining, by a base station according to a time distribution model, an uplink grant transmission occasion, wherein the time distribution model is configured to represent time information when a terminal needs to initiate random access after the base station transmits the downlink data; and assigning, by the base station, an uplink grant to the terminal at the determined uplink grant transmission occasion. Preferred embodiments of the method of claim 3 are defined by claims 4 to 10.

As defined by claim 11, the invention further provides a base station, comprising: a first determining module and a first assigning module, wherein the first determining module is configured to determine that a terminal needs to transmit uplink data; and the first assigning module is configured to assign an uplink grant to the terminal before the next time point at which a Narrowband Physical Random Access Channel, NPRACH, is accessed; wherein information on a time point at which the NPRACH is accessed is contained in a NPRACH parameter configured for the base station by a network management system.

As defined by claim 12, the invention further provides a computer-readable storage medium having computer executable instructions stored thereon, wherein the computer executable instructions, when executed by a processor, carry out the method for providing an uplink grant according to claim 1 or 2.

As defined by claim 13, the invention further provides a device for providing an uplink grant, the device comprising a processor and a memory, wherein the memory has stored thereon a computer program operable by the processor, wherein the computer program, when executed by the processor, carries out the method for providing an uplink grant according to claim 1 or 2.

As defined by claim 14, the invention further provides a base station, comprising: a second determining module and a second assigning module, wherein the second determining module is configured to determine, according to a time distribution model, an uplink grant transmission occasion, wherein the time distribution model is configured to represent time information when a terminal needs to initiate random access after the base station transmits downlink data; and the second assigning module is configured to assign an uplink grant to the terminal at the determined uplink grant transmission occasion. A preferred embodiment of the base station of claim 14 is defined by claim 15.

As defined by claim 16, the invention further provides a computer-readable storage medium having computer executable instructions stored thereon, wherein the computer executable instructions, when executed by a processor, carry out the method for providing an uplink grant according to any one of claims 3 to 10.

As defined by claim 17, the invention further provides a device for providing an uplink grant, the device comprising a processor and a memory, wherein the memory has stored thereon a computer program executable by the processor, wherein the computer program, when executed by the processor, carries out the method for providing an uplink grant according to any one of claims 3 to 10.

### BRIEF DESCRIPTION OF DRAWINGS

Accompanying drawings are provided for further understanding of the technical solution of the disclosure and constitute a part of the specification. Hereinafter, these drawings are intended to explain the technical solution of the disclosure together with the following embodiments, but should not be considered as a limitation to the technical solution of the disclosure.
FIG. 1 is a flowchart of a method for providing an uplink grant according to the present disclosure;
FIG. 2 is a schematic flowchart of a method for providing an uplink grant according to a first embodiment of the present disclosure;
FIG. 3 is a flowchart of another method for providing an uplink grant according to the present disclosure;
FIG. 4 is a schematic flowchart of a method for providing an uplink grant according to a second embodiment of the present disclosure;
FIG. 5 is a schematic flowchart of a method for providing an uplink grant according to a third embodiment of the present disclosure;
FIG. 6 is a schematic flowchart of a method for providing an uplink grant according to a fourth embodiment of the present disclosure;
FIG. 7 is a block diagram of a base station according to an embodiment of the present disclosure; and
FIG. 8 is a block diagram of another base station according to an embodiment of the present disclosure.

### DETAIL DESCRIPTION OF EMBODIMENTS

In a typical configuration of the present disclosure, a computing device includes one or more processors (CPUs), an input/output interface, a network interface, and a memory.

The memory may take forms of a volatile memory such as a Random Access Memory (RAM), and /or a nonvolatile memory such as Read-Only Memory (ROM) or flash RAM in a computer-readable medium. The memory is an example of the computer-readable medium.

The computer-readable medium includes a persistent or non-persistent, removable or non-removable medium that can realize information storage in any method or by any technique. The information may be computer-readable instructions, data structures, program modules, or other data. Examples of the computer storage medium include, but are not limited to, Phase Change RAM (PRAM), Static RAM (SRAM), Dynamic RAM (DRAM), other types of RAM, Read-Only Memory (ROM), Electrically Erasable Programmable Read-Only Memory (EEPROM), flash memory or other memory technology, Compact Disc-ROM (CD-ROM), Digital Video Disc (DVD) or other optical storage, magnetic cassettes, tape disk storage or other magnetic storage devices, or any other non-transmission medium, which can be configured to store information that can be accessed by a computing device. As defined herein, the computer-readable medium does not include transitory computer-readable media (transitory media) such as modulated data signals and carrier waves.

For clarity and better understanding of the objects, technical solution and advantages of the disclosure, embodiments of the disclosure will now be described in detail in conjunction with the accompanying drawings. It should be noted that the embodiments of the disclosure and features herein may be combined with each other in any manner as long as they are not contradictory.

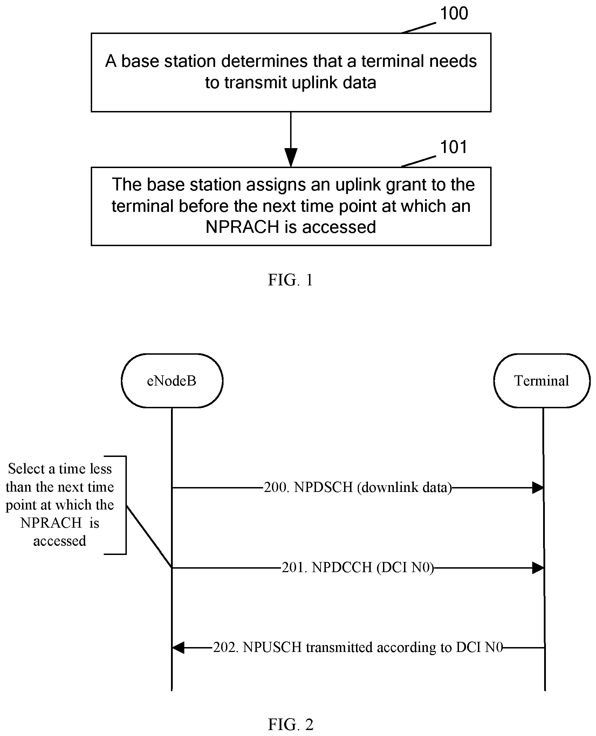

FIG. 1 is a flowchart of a method for providing an uplink grant according to the present disclosure. As shown in FIG. 1, the method includes the following operations 100 to 101.

At operation 100: a base station determines that a terminal needs to transmit uplink data.

In an illustrative example, this operation may include:
transmitting downlink data from the base station and setting a polling indication at a header of a Radio Link Control (RLC) layer Protocol Data Unit (PDU) to determine that the terminal needs to transmit uplink data.

To ensure correct transmission of the RLC PDU, a polling mechanism is introduced into the Automatic Repeat reQuest (ARQ) process, whereby a transmitter is allowed to receive an acknowledgement from a receiver. In other words, the setting of the polling indication at the header of the RLC PDU means that the transmitter requires a status report from the receiver.

In this disclosure, if a base station (e.g., eNodeB) sets a polling indication bit at the header of the RLC layer PDU, it means that after receiving the RLC PDU with the setting of the polling indication bit, the terminal organizes a status report to be transmitted to the base station, that is, the terminal needs to transmit uplink data.

In an illustrative example, the method for providing an uplink grant shown in FIG. 1 of the present disclosure is also applicable to other scenarios that require the terminal to return uplink data, including but not limited to the case where the base station completes downlink data transmission and explicitly requires the terminal to give a response. For example: the base station delivers a UE capability query to the terminal, and then, the terminal needs to give a UE capability query response, i.e., the base station can determine that in this scenario, the terminal needs to return uplink data. As another example: after a downlink ping packet service is completed, the base station can determine that the terminal needs to return a response packet, that is, the base station can determine that in this scenario, the terminal needs to return uplink data.

At operation 101: the base station assigns an uplink grant to the terminal before the next time point at which a Narrowband Physical Random Access Channel (NPRACH) is accessed.

Information on the time point at which the NPRACH is accessed is contained in the NPRACH parameters configured for the base station by a network management system.

In the method for providing an uplink grant shown in FIG. 1, after learning that the terminal needs to transmit uplink data, the base station transmits an uplink grant to the terminal in advance before the next time point at which the NPRACH is accessed, whereby the terminal is prevented from acquiring the uplink grant by initiating a random access process. In this manner, the random access process is effectively reduced, and the air interface resources are saved. Especially in an environment with a large number of terminals, the number of random access processes is greatly reduced, whereby the air interface resources are effectively saved.

An embodiment of the present disclosure further provides a computer-readable storage medium having computer executable instructions stored thereon. The computer executable instructions are configured to carry out any one of the methods for providing an uplink grant in FIG. 1.

An embodiment of the present disclosure further provides a device for providing an uplink grant, including a processor and a memory. The memory has stored thereon a computer program executable on the processor and configured to carry out operations of any one of the methods for providing an uplink grant in FIG. 1.

FIG. 2 is a schematic flowchart of a method for providing an uplink grant according to a first embodiment of the present disclosure. In the first embodiment taking an NB-IoT system as an example, when an eNodeB completes the downlink data transmission and in the case where the terminal is required to return a status report or other uplink data, the eNodeB transmits an uplink grant to the terminal in advance prior to the next time point at which the NPRACH is accessed, which, as shown in FIG. 2, includes operations 200 to 202.

At operation 200: the eNodeB transmits downlink data to the terminal through a Narrowband Physical Downlink Shared Channel (NPDSCH), and sets a polling indication at a header of the RLC layer PDU to inform the terminal to organize and transmit a status report to the eNodeB.

At operation 201, before the next time point at which the NPRACH is accessed, the eNodeB assigns an uplink grant to the terminal through a Narrowband Physical Downlink Control Channel (NPDCCH) carrying a Downlink Control Information format N0 (DCI N0, which is also referred to as DCI format N0).

In this operation, when the eNodeB completes the downlink data transmission and determines that the terminal needs to transmit uplink data, the eNodeB randomly delays for a period of time before the next time point at which the NPRACH is accessed and assigns the uplink grant to the terminal in advance, whereby the terminal is prevented from acquiring the uplink grant by initiating random access. That is, the number of random access processes is greatly reduced, and there is no need to occupy a great amount of air interface resources due to initiation of the random access processes.

At operation 202, after obtaining the uplink grant, the terminal transmits uplink data through the NPUSCH according to the DCI N0, so as to transmit the status report to the eNodeB.

The method for providing an uplink grant in the first embodiment of the disclosure provides the uplink grant in a simple manner, and thus saves the air interface resources.

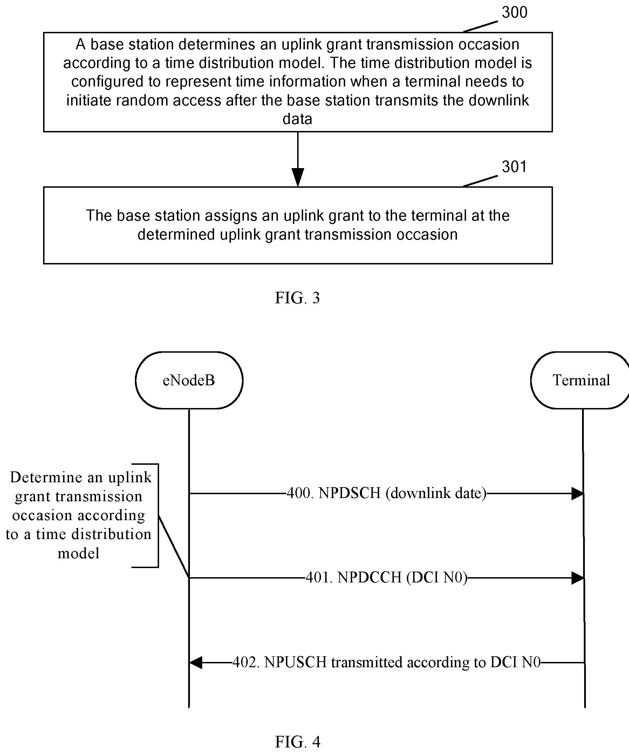

FIG. 3 is a flowchart of another method for providing an uplink grant according to the present disclosure. As shown in FIG. 3, the method includes operations 300 to 301.

At operation 300: a base station determines an uplink grant transmission occasion according to a time distribution model. The time distribution model is configured to represent time information when a terminal needs to initiate random access after the base station transmits the downlink data.

In an illustrative example, before the base station determines the uplink grant transmission occasion according to the time distribution model, the method further includes:
recording, by the base station within a preset cycle, conditions that a preset number of terminals need to obtain uplink grants by initiating random access after receiving the downlink data within the preset time period, and acquiring the time distribution model for the terminal triggering a random access process.

In an illustrative example, the time distribution model represents:
a trigger time range, i.e., [minimum trigger time (minTime), maximum trigger time (maxTime)] for the terminal triggering random access to acquire the uplink grant after the base station completes the downlink data transmission;
   or,
time points at which the terminal triggers random access in a relatively intensive manner to acquire the uplink grant after the base station completes the downlink data transmission, which serve as trigger time points in the time distribution model at which the terminal triggers random access to acquire the uplink grant in the shortest time.

In an illustrative example, the trigger time points at which the terminal triggers random access in a relatively intensive manner to acquire the uplink grant can be considered as a high probability interval established by statistics. That is, in the statistics of triggering random access to acquire an uplink grant, there is a high probability of falling into this high probability interval. The trigger time points at which the terminal triggers random access in a relatively intensive manner to acquire the uplink grant include a relatively small time range, but there is a very high probability that the time point for acquiring an uplink grant through random access will fall into this time range.

In an illustrative example, the preset time period and the preset number of terminals can be configured by a higher layer, or may be set by a base station based on historical experience values.

In an illustrative example, determining, by the base station according to the time distribution model, the uplink grant transmission occasion, can include:
taking, by the base station, a time which is represented by the time distribution model and which is less than the minTime as the uplink grant transmission occasion; or,
taking, by the base station, the determined trigger time point as the uplink grant transmission occasion according to the time distribution model.

In an illustrative example, before acquiring the time distribution model for the terminal triggering the random access process, the method further includes:
assigning the uplink grant to the terminal after the base station completes downlink data transmission and determines that the terminal will trigger random access to acquire an uplink grant, and recording a time length before the base station receives a random access request, i.e., a time length for the terminal to trigger the random access after the base station completes the downlink data transmission.

In an illustrative example, if the counted number of terminals within the preset time period does not reach the preset number of terminals, no uplink grant is assigned to the terminal.

At operation 301, the base station assigns an uplink grant to the terminal at the determined uplink grant transmission occasion.

In an illustrative example, operation 301 can include:
assigning, after the base station completes downlink data transmission, an uplink grant to the terminal at a time less than the minTime; or,
assigning, after the base station completes downlink data transmission, an uplink grant to the terminal at a time point less than the trigger time point.

In an illustrative example, the time less than the minTime can include:
any time less than the minTime after the base station completes the downlink data transmission.

In an illustrative example, operation 301 can include:
selecting, when the base station configures a Logical Channel SR-Prohibit to be True and after the base station completes downlink data transmission, a smaller value of the minTime and a configuration parameter, i.e., the Logical Channel SR-Prohibit Timer parameter, or selecting a smaller value of the minTime and a Buffer Status Report (BSR) retransmission timer parameter, and assigning an uplink grant to the terminal at any time less than the smaller value; or
selecting, when the base station configures a Logical Channel SR-Prohibit to be True and after the base station completes downlink data transmission, a smaller value of the trigger time point and a configuration parameter, i.e., the Logical Channel SR-Prohibit Timer parameter, or selecting a smaller value of the trigger time point and a BSR retransmission timer parameter, and assigning an uplink grant to the terminal at any time less than the smaller value.

In an illustrative example, operation 301 can include:
the base station assigns an uplink grant to the terminal through the NPDCCH carrying DCI N0 at the determined uplink grant transmission occasion. Further, after the base station receives the uplink data transmitted from the terminal through the NPUSCH according to DCI N0, if the terminal still needs to transmit uplink data, the method of the disclosure further includes:
according to operation 300, determining, according to the time distribution model and the configuration parameter, that a plurality of terminals acquire uplink grants by initiating random access; and according to operation 301, assigning, by the base station, an uplink grant to each of the plurality of terminals again at the determined plurality of uplink grant transmission occasions. In other words, when it is confirmed according to the time distribution model that the downlink data is completely transmitted under the current service scenario and there is a high probability that the terminal will transmit uplink data, the base station can prevent the terminal from acquiring an uplink grant through random access by transmitting the uplink grant twice successively.

In the method for providing an uplink grant shown in FIG. 3 of the present disclosure, after learning that the terminal needs to transmit uplink data, the base station transmits the uplink grant to the terminal in advance according to the time distribution model obtained from periodic statistics, whereby the terminal is prevented from acquiring the uplink grant by initiating a random access process. In this manner, the random access process is effectively reduced, and the air interface resources can be saved. Especially in an environment with a large number of terminals, the number of random access processes can be greatly reduced, and the air interface resources can be effectively saved.

An embodiment of the present disclosure further provides a computer-readable storage medium having computer executable instructions stored thereon. The computer executable instructions are configured to carry out any one of the methods for providing an uplink grant in FIG. 3.

An embodiment of the present disclosure further provides a device for providing an uplink grant, including a processor and a memory. The memory has stored thereon a computer program executable by the processor and configured to carry out operations of any one of the methods for providing an uplink grant in FIG. 3.

FIG. 4 is a schematic flowchart of a method for providing an uplink grant according to a second embodiment of the present disclosure. In the second embodiment taking an NB-IoT system as an example, after completing downlink data transmission, an eNodeB determines to transmit an uplink grant to a terminal in advance according to a time distribution model established by the eNodeB. In this embodiment, the eNodeB periodically records, according to a preset cycle, conditions that a preset number of terminals need to obtain uplink grants by initiating random access after receiving the downlink data within a preset time period, and acquires the time distribution model for the terminal triggering a random access process. As shown in FIG. 4, one of the methods includes operations 400 to 402.

At operation 400: the eNodeB transmits downlink data to the terminal through an NPDSCH.

At operation 401: the eNodeB takes a time in the time distribution model that is less than the minTime as the uplink grant transmission occasion, and assigns an uplink grant to the terminal by an NPDCCH carrying DCI N0, or the base station takes the determined trigger time point as the uplink grant transmission occasion according to the time distribution model, and assigns an uplink grant to the terminal by an NPDCCH carrying DCI N0.

At operation 402: after obtaining the uplink grant, the terminal transmits uplink data through the NPUSCH according to the DCI N0, so as to transmit the status report to the eNodeB.

The method for providing an uplink grant in the second embodiment of the disclosure provides the uplink grant in a simple manner, thereby saving the air interface resources.

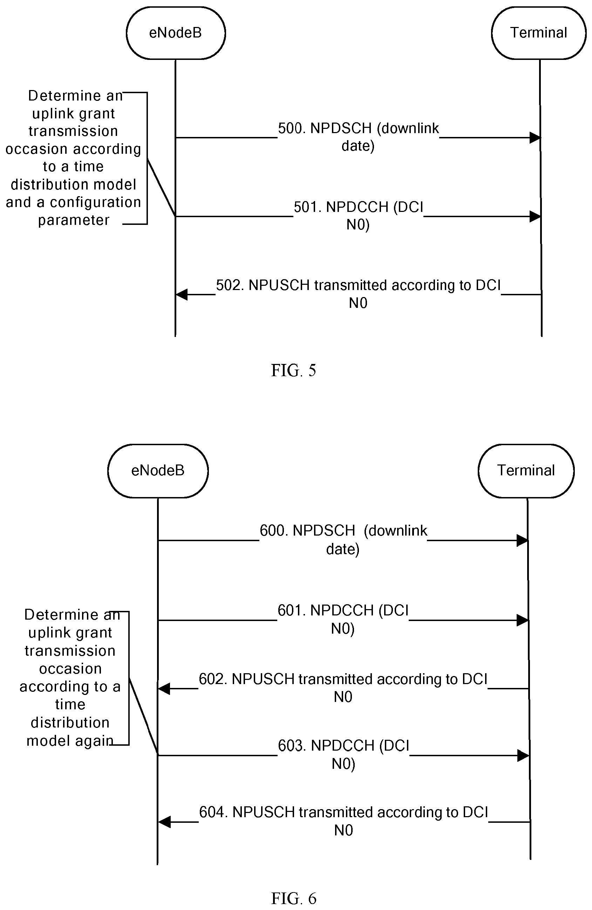

FIG. 5 is a schematic flowchart of a method for providing an uplink grant according to a third embodiment of the present disclosure. In the third embodiment taking an NB-IoT system as an example, after completing downlink data transmission, an eNodeB determines to transmit an uplink grant to a terminal in advance according to a time distribution model established by the eNodeB and a configuration parameter. In this embodiment, the eNodeB periodically records, according to a preset cycle, conditions that a preset number of terminals need to obtain uplink grants by initiating random access after receiving the downlink data within a preset time period, and acquires the time distribution model for the terminal triggering a random access process. As shown in FIG. 5, the method includes operations 500 to 502.

At operation 500: the eNodeB transmits downlink data to the terminal through an NPDSCH.

At operation 501: when the eNodeB configures a Logical Channel SR-Prohibit to be True, the eNodeB selects a smaller value of the minTime and the Logical Channel SR-Prohibit Timer parameter, or selects a smaller value of the minTime and a BSR retransmission timer parameter, and assigns an uplink grant to the terminal at any time less than the smaller value by an NPDCCH carrying DCI N0; or
when the eNodeB configures a Logical Channel SR-Prohibit to be True, the eNodeB selects a smaller value of the trigger time point and the Logical Channel SR-Prohibit Timer parameter, or selects a smaller value of the trigger time point and a BSR retransmission timer parameter, and assigns an uplink grant to the terminal at any time less than the smaller value by an NPDCCH carrying DCI N0.

At operation 502: after obtaining the uplink grant, the terminal transmits uplink data through the NPUSCH according to the DCI N0, so as to transmit the status report to the eNodeB.

The method for providing an uplink grant in the third embodiment provides the uplink grant in a simple manner, thereby saving the air interface resources.

FIG. 6 is a schematic flowchart of a fourth embodiment of a method for providing an uplink grant according to the present disclosure. In the fourth embodiment, an NB-IoT system is taken as an example. In this embodiment, the eNodeB periodically records, according to a preset cycle, conditions that a preset number of terminals need to obtain uplink grants by initiating random access after receiving the downlink data within a preset time period, and acquires the time distribution model for the terminal triggering a random access process. As shown in FIG. 6, the method includes operations 600 to 602. The specific implementation of operations 600 to 602 can refer to operations 400 to 402 or operations 500 to 502, which will not be repeatedly described here.

After the eNodeB receives the uplink data transmitted from the terminal through the NPUSCH according to DCI N0, if the terminal still needs to transmit uplink data, the method will proceed to operation 603.

At operation 603: the eNodeB determines, according to the time distribution model or the time distribution model and a configuration parameter, that a plurality of terminals will acquire uplink grants by initiating random access again. The eNodeB determines, according to the time distribution model or the time distribution model and a configuration parameter, a plurality of uplink grant transmission occasions, and assigns an uplink grant to the respective terminal by an NPDCCH carrying DCI N0.

At operation 604, the eNodeB assigns an uplink grant to each of the plurality of terminals at the determined uplink grant transmission occasions.

The method for providing an uplink grant in the fourth embodiment provides the uplink grant in a simple manner, thereby saving the air interface resources. Especially in an environment with a large number of terminals, the number of random access processes can be greatly reduced, and the air interface resources can be effectively saved.

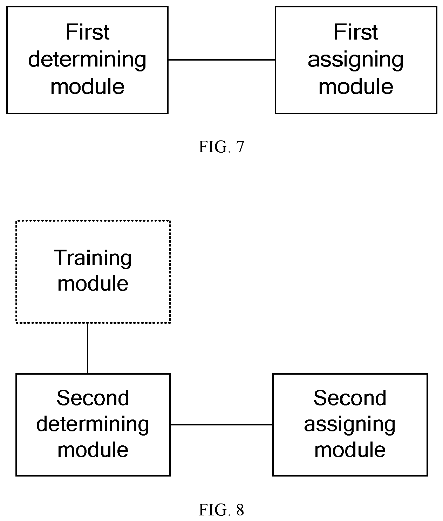

FIG. 7 is a block diagram of a base station according to an embodiment of the present disclosure. As shown in FIG. 7, the device includes at least: a first determining module and a first assigning module, wherein the first determining module is configured to determine that a terminal needs to transmit uplink data, and the first assigning module is configured to assign an uplink grant to the terminal before the next time point at which a Narrowband Physical Random Access Channel (NPRACH) is accessed.

The base station of the disclosure provides the uplink grant in a simple manner, thereby saving the air interface resources.

FIG. 8 is a block diagram of another base station according to an embodiment of the present disclosure. As shown in FIG. 8, the device includes at least: a second determining module and a second assigning module, wherein the second determining module is configured to determine, according to a time distribution model, an uplink grant transmission occasion, the time distribution model being configured to represent time information when a terminal needs to initiate random access after the base station transmits the downlink data, and the second assigning module is configured to assign an uplink grant to the terminal at the determined uplink grant transmission occasion.

In an illustrative example, the base station as shown in FIG. 8 further includes: a training module configured to:
record within a preset cycle conditions that a preset number of terminals obtain uplink grants by initiating random access after receiving the downlink data within the preset time period, and acquire the time distribution model for the terminal triggering a random access process.

In an illustrative example, the time distribution model represents:
a trigger time range, i.e., [minimum trigger time (minTime), maximum trigger time (maxTime)] for the terminal to trigger random access to acquire an uplink grant after the base station completes downlink data transmission;
   or
relatively intensive time points served as trigger time points in the time distribution model at which the terminal triggers random access to acquire an uplink grant in the shortest time by means of recording within a preset cycle conditions that a preset number of terminals need to obtain uplink grants by initiating random access after receiving the downlink data within a preset time period.

In an illustrative example, the second determining module is specifically configured to:
take the time in the time distribution model that is less than the minTime as the uplink grant transmission occasion; or take the determined trigger time point as the uplink grant transmission occasion according to the time distribution model.

In an illustrative example, the second determining module is further configured to:
assign an uplink grant to the terminal after completing downlink data transmission and determining that the terminal will trigger random access to acquire an uplink grant, and record a time length before the base station receives a random access request, i.e., a time length for the terminal to trigger the random access after the base station completes the downlink data transmission.

In an illustrative example, the second assigning module is specifically configured to:
assign, after completing downlink data transmission, an uplink grant to the terminal at a time less than the minTime; or assign, after completing downlink data transmission, an uplink grant to the terminal at a time point less than the trigger time point.

In an illustrative example, the second assigning module is specifically configured to:
select, when a Logical Channel SR-Prohibit is configured to be True and after the base station completes downlink data transmission, a smaller value of the minTime and the Logical Channel SR-Prohibit Timer parameter, or select a smaller value of the minTime and a BSR retransmission timer parameter, and assign an uplink grant to the terminal at any time less than the smaller value; or
select, when a Logical Channel SR-Prohibit is configured to be True and after the base station completes downlink data transmission, a smaller value of the trigger time point and the Logical Channel SR-Prohibit Timer parameter, or select a smaller value of the trigger time point and a BSR retransmission timer parameter, and assign an uplink grant to the terminal at any time less than the smaller value.

In an illustrative example, the second determining module is further configured to:
after receiving the uplink data transmitted from the terminal through the NPUSCH according to DCI NO, if the terminal still needs to transmit uplink data, determine, according to the time distribution model or the time distribution model and a configuration parameter, that a plurality of terminals will acquire uplink grants by initiating random access again. Accordingly, the second assigning module is further configured to: assign an uplink grant to each of the plurality of terminals again at the determined plurality of uplink grant transmission occasions.

The base station provided in the embodiment of the disclosure provides the uplink grant in a simple manner, thereby saving the air interface resources.

## Claims

1. A method for providing an uplink grant, comprising:
determining, by a base station, that a terminal needs to transmit uplink data; and
assigning, by the base station, an uplink grant to the terminal before the next time point at which a Narrowband Physical Random Access Channel, NPRACH, is accessed;
wherein information on a time point at which the NPRACH is accessed is contained in a NPRACH parameter configured for the base station by a network management system.

2. The method according to claim 1, wherein determining, by the base station, that the terminal needs to transmit the uplink data comprises:
transmitting downlink data from the base station and setting a polling indication at a header of a Radio Link Control, RLC, layer Protocol Data Unit, PDU, to determine that the terminal needs to transmit the uplink data; or
determining, when the base station completes downlink data transmission and definitely requests a response from the terminal, that the terminal needs to transmit the uplink data.

3. A method for providing an uplink grant, comprising:
determining, by a base station according to a time distribution model, an uplink grant transmission occasion, wherein the time distribution model is configured to represent time information when a terminal needs to initiate random access after the base station transmits downlink data; and
assigning, by the base station, the uplink grant to the terminal at the determined uplink grant transmission occasion.

4. The method according to claim 3, wherein, before determining, by the base station according to the time distribution model, the uplink grant transmission occasion, the method further comprises:
recording, by the base station within a preset cycle, conditions that a preset number of terminals obtain uplink grants by initiating random access after receiving the downlink data within the preset time period, and acquiring the time distribution model for the terminal triggering a random access process.

5. The method according to claim 3 or 4, wherein the time distribution model represents:
a trigger time range, [minimum trigger time, minTime, maximum trigger time, maxTime] for the terminal triggering random access to acquire the uplink grant after the base station completes downlink data transmission;
or,
trigger time points at which the terminal triggers random access in an intensive manner to acquire the uplink grant after the base station completes downlink data transmission.

6. The method according to claim 5, wherein determining, by the base station according to the time distribution model, the uplink grant transmission occasion, comprises:
taking, by the base station, the time which is represented by the time distribution model and which is less than the minTime as the uplink grant transmission occasion; or
taking, by the base station, the determined trigger time point as the uplink grant transmission occasion according to the time distribution model.

7. The method according to claim 4, wherein before acquiring the time distribution model for the terminal triggering the random access process, the method further comprises:
assigning the uplink grant to the terminal after the base station completes downlink data transmission and determines that the terminal is to trigger random access to acquire the uplink grant, and recording a time length for the terminal triggering the random access after the base station completes the downlink data transmission.

8. The method according to claim 5, wherein assigning, by the base station, the uplink grant to the terminal at the determined uplink grant transmission occasion comprises:
assigning, after the base station completes downlink data transmission, the uplink grant to the terminal at a time less than the minTime; or,
assigning, after the base station completes downlink data transmission, the uplink grant to the terminal at a time point less than the trigger time point.

9. The method according to claim 5, wherein assigning, by the base station, the uplink grant to the terminal at the determined uplink grant transmission occasion comprises:
selecting, when the base station configures a Logical Channel SR-Prohibit to be True and after the base station completes downlink data transmission, a smaller value of the minTime and the Logical Channel SR-Prohibit Timer parameter, or selecting a smaller value of the minTime and a Buffer Status Report, BSR, retransmission timer parameter, and assigning the uplink grant to the terminal at any time less than the smaller value;
or,
selecting, when the base station configures a Logical Channel SR-Prohibit to be True and after the base station completes downlink data transmission, a smaller value of the trigger time point and the Logical Channel SR-Prohibit Timer parameter, or selecting a smaller value of the trigger time point and the BSR retransmission timer parameter, and assigning the uplink grant to the terminal at any time less than the smaller value.

10. The method according to claim 5, wherein
assigning, by the base station, the uplink grant to the terminal at the determined uplink grant transmission occasion comprises:
assigning, by the base station, the uplink grant to the terminal through a Narrowband Physical Downlink Control Channel, NPDCCH, carrying a downlink control information format, DCI N0, at the determined uplink grant transmission occasion; and after the base station receives uplink data transmitted from the terminal through a Narrowband Physical Uplink Shared Channel, NPUSCH, according to DCI N0, if the terminal still needs to transmit the uplink data, the method further comprises:
determining, by the base station according to the time distribution model or the time distribution model and a configuration parameter, that a plurality of terminals acquire uplink grants by initiating random access; and
assigning, by the base station, an uplink grant to each of the plurality of terminals again at determined uplink grant transmission occasions.

11. A base station, comprising: a first determining module and a first assigning module, wherein
the first determining module is configured to determine that a terminal needs to transmit uplink data; and
the first assigning module is configured to assign an uplink grant to the terminal before the next time point at which a Narrowband Physical Random Access Channel, NPRACH, is accessed;
wherein information on a time point at which the NPRACH is accessed is contained in a NPRACH parameter configured for the base station by a network management system.

12. A computer-readable storage medium having computer executable instructions stored thereon, wherein the computer executable instructions, when executed by a processor, carry out the method for providing an uplink grant according to claim 1 or 2.

13. A device for providing an uplink grant, the device comprising a processor and a memory, wherein the memory has stored thereon a computer program operable by the processor, wherein the computer program, when executed by the processor, carries out the method for providing an uplink grant according to claim 1 or 2.

14. A base station, comprising: a second determining module and a second assigning module, wherein
the second determining module is configured to determine, according to a time distribution model, an uplink grant transmission occasion, wherein the time distribution model is configured to represent time information when a terminal needs to initiate random access after the base station transmits downlink data; and
the second assigning module is configured to assign an uplink grant to the terminal at the determined uplink grant transmission occasion.

15. The base station according to claim 14, further comprising a training module configured to:
record within a preset cycle conditions that a preset number of terminals obtain uplink grants by initiating random access after receiving the downlink data within the preset time period, and acquire the time distribution model for the terminal triggering a random access process.

16. A computer-readable storage medium having computer executable instructions stored thereon, wherein the computer executable instructions, when executed by a processor, carry out the method for providing an uplink grant according to any one of claims 3 to 10.

17. A device for providing an uplink grant, the device comprising a processor and a memory, wherein the memory has stored thereon a computer program executable by the processor, wherein the computer program, when executed by the processor, carries out the method for providing an uplink grant according to any one of claims 3 to 10.

## Patentansprüche

1. Verfahren zum Bereitstellen einer Uplink-Bewilligung, umfassend:
Bestimmen, durch eine Basisstation, dass ein Endgerät Uplink-Daten übertragen muss; und
Zuweisen, durch die Basisstation, einer Uplink-Bewilligung an das Endgerät vor dem nächsten Zeitpunkt, zu dem auf einen physikalischen Schmalband-Zufallszugriffskanal, NPRACH, zugegriffen wird;
wobei Informationen über einen Zeitpunkt, zu dem auf den NPRACH zugegriffen wird, in einem NPRACH-Parameter enthalten sind, der durch ein Netzwerkverwaltungssystem für die Basisstation konfiguriert wird.

2. Verfahren nach Anspruch 1, wobei das Bestimmen, durch die Basisstation, dass das Endgerät die Uplink-Daten übertragen muss, umfasst:
Übertragen von Downlink-Daten von der Basisstation und Einstellen einer Abfrageanzeige in einem Header einer Funkverbindungssteuerungsschicht, RLC-Schicht, einer Protokolldateneinheit, PDU, um zu bestimmen, dass das Endgerät die Uplink-Daten übertragen muss; oder
Bestimmen, wenn die Basisstation die Downlink-Datenübertragung vervollständigt und definitiv eine Antwort von dem Endgerät anfordert, dass das Endgerät die Uplink-Daten übertragen muss.

3. Verfahren zum Bereitstellen einer Uplink-Bewilligung, umfassend:
Bestimmen, durch eine Basisstation gemäß einem Zeitverteilungsmodell, einer Uplink-Bewilligungsübertragungsgelegenheit, wobei das Zeitverteilungsmodell zum Repräsentieren von Zeitinformationen konfiguriert ist, wenn ein Endgerät einen Zufallszugriff initiieren muss, nachdem die Basisstation Downlink-Daten überträgt; und
Zuweisen, durch die Basisstation, der Uplink-Bewilligung an das Endgerät bei der bestimmten Uplink-Bewilligungsübertragungsgelegenheit.

4. Verfahren nach Anspruch 3, wobei das Verfahren vor dem Bestimmen, durch die Basisstation gemäß dem Zeitverteilungsmodell, der Uplink-Bewilligungsübertragungsgelegenheit ferner umfasst:
Aufzeichnen, durch die Basisstation innerhalb eines voreingestellten Zyklus, von Bedingungen, dass eine voreingestellte Anzahl von Endgeräten Uplink-Bewilligungen durch Initiieren eines Zufallszugriffs nach dem Empfangen der Downlink-Daten innerhalb der voreingestellten Zeitspanne erhalten, und Erfassen des Zeitverteilungsmodells für das Endgerät, das einen Zufallszugriffsprozess auslöst.

5. Verfahren nach Anspruch 3 oder 4, wobei das Zeitverteilungsmodell repräsentiert:
ein Auslösezeitintervall [minimale Auslösezeit, minZeit, maximale Auslösezeit, maxZeit] für das Endgerät, das einen Zufallszugriff auslöst, um die Uplink-Bewilligung zu erfassen, nachdem die Basisstation die Downlink-Datenübertragung vervollständigt;
oder,
Auslösezeitpunkte, zu denen das Endgerät den Zufallszugriff auf eine intensive Weise auslöst, um die Uplink-Bewilligung zu erfassen, nachdem die Basisstation die Downlink-Datenübertragung vervollständigt.

6. Verfahren nach Anspruch 5, wobei das Bestimmen, durch die Basisstation gemäß dem Zeitverteilungsmodell, der Uplink-Bewilligungsübertragungsgelegenheit umfasst:
Nehmen, durch die Basisstation, der Zeit, die durch das Zeitverteilungsmodell repräsentiert wird und die kleiner als die minZeit ist, als die Uplink-Bewilligungsübertragungsgelegenheit; oder
Nehmen, durch die Basisstation, des bestimmten Auslösezeitpunkts als die Uplink-Bewilligungsübertragungsgelegenheit gemäß dem Zeitverteilungsmodell.

7. Verfahren nach Anspruch 4, wobei das Verfahren vor dem Erfassen des Zeitverteilungsmodells für das Endgerät, das den Zufallszugriffsprozess auslöst, ferner umfasst:
Zuweisen der Uplink-Bewilligung an das Endgerät, nachdem die Basisstation die Downlink-Datenübertragung vervollständigt und bestimmt, dass das Endgerät den Zufallszugriff auslösen soll, um die Uplink-Bewilligung zu erfassen, und Aufzeichnen einer Zeitdauer für das Endgerät, das den Zufallszugriff auslöst, nachdem die Basisstation die Downlink-Datenübertragung vervollständigt.

8. Verfahren nach Anspruch 5, wobei das Zuweisen, durch die Basisstation, der Uplink-Bewilligung an das Endgerät bei der bestimmten Uplink-Bewilligungsübertragungsgelegenheit umfasst:
Zuweisen, nachdem die Basisstation die Downlink-Datenübertragung vervollständigt, der Uplink-Bewilligung an das Endgerät zu einer Zeit, die kleiner als die minZeit ist; oder
Zuweisen, nachdem die Basisstation die Downlink-Datenübertragung vervollständigt, der Uplink-Bewilligung an das Endgerät zu einem Zeitpunkt, der kleiner als der Auslösezeitpunkt ist.

9. Verfahren nach Anspruch 5, wobei das Zuweisen, durch die Basisstation, der Uplink-Bewilligung an das Endgerät bei der bestimmten Uplink-Bewilligungsübertragungsgelegenheit umfasst:
Auswählen, wenn die Basisstation einen logischen Kanal SR-Verhinder als wahr konfiguriert und nachdem die Basisstation die Downlink-Datenübertragung vervollständigt, eines kleineren Werts des minZeit- und des logischen Kanal SR-Verhinder-Zeitgeber-Parameters, oder Auswählen eines kleineren Werts der minZeit- und eines Pufferstatusbericht-, BSR-, Neuübertragung-Zeitgeber-Parameters, und Zuweisen der Uplink-Bewilligung an das Endgerät zu jeder Zeit, die kleiner als der kleinere Wert ist;
oder,
Auswählen, wenn die Basisstation einen logischen Kanal SR-Verhinder als wahr konfiguriert und nachdem die Basisstation die Downlink-Datenübertragung vervollständigt, eines kleineren Werts des Auslösezeitpunkt- und des logischen Kanal SR-Verhinder-Zeitgeber-Parameters, oder Auswählen eines kleineren Werts des Auslösezeitpunkt- und des BSR-Neuübertragung-Zeitgeber-Parameters, und Zuweisen der Uplink-Bewilligung an das Endgerät zu jeder Zeit, die kleiner als der kleinere Wert ist.

10. Verfahren nach Anspruch 5, wobei
das Zuweisen, durch die Basisstation, der Uplink-Bewilligung an das Endgerät bei der bestimmten Uplink-Bewilligungsübertragungsgelegenheit umfasst:
Zuweisen, durch die Basisstation, der Uplink-Bewilligung an das Endgerät durch einen physikalischen Schmalband-Downlink-Steuerkanal, NPDCCH, der ein Downlink-Steuerinformationsformat, DCI N0, trägt, bei der bestimmten Uplink-Bewilligungsübertragungsgelegenheit; und nachdem die Basisstation Uplink-Daten, die von dem Endgerät übertragen werden, durch einen gemeinsamen physikalischen Schmalband-Uplink-Kanal, NPUSCH, gemäß DCI N0 empfängt, wenn das Endgerät die Uplink-Daten noch übertragen muss, das Verfahren ferner umfasst:
Bestimmen, durch die Basisstation gemäß dem Zeitverteilungsmodell oder dem Zeitverteilungsmodell und einem Konfigurationsparameter, dass eine Vielzahl von Endgeräten Uplink-Bewilligungen durch Initiieren eines Zufallszugriffs erfasst; und
Zuweisen, durch die Basisstation, einer Uplink-Bewilligung an jedes der Vielzahl von Endgeräten erneut bei bestimmten Uplink-Bewilligungsübertragungsgelegenheiten.

11. Basisstation, umfassend: ein erstes Bestimmungsmodul und ein erstes Zuweisungsmodul, wobei
das erste Bestimmungsmodul zum Bestimmen konfiguriert ist, dass ein Endgerät Uplink-Daten übertragen muss; und
das erste Zuweisungsmodul zum Zuweisen einer Uplink-Bewilligung an das Endgerät vor dem nächsten Zeitpunkt konfiguriert ist, zu dem auf einen physikalischen Schmalband-Zufallszugriffskanal, NPRACH, zugegriffen wird;
wobei Informationen über einen Zeitpunkt, zu dem auf den NPRACH zugegriffen wird, in einem NPRACH-Parameter enthalten sind, der durch ein Netzwerkverwaltungssystem für die Basisstation konfiguriert wird.

12. Computerlesbares Speichermedium, auf dem computerausführbare Anweisungen gespeichert sind, wobei die computerausführbaren Anweisungen, wenn sie durch einen Prozessor ausgeführt werden, das Verfahren zum Bereitstellen einer Uplink-Bewilligung nach Anspruch 1 oder 2 ausführen.

13. Vorrichtung zum Bereitstellen einer Uplink-Bewilligung, wobei die Vorrichtung einen Prozessor und einen Speicher umfasst, wobei in dem Speicher ein Computerprogramm gespeichert ist, das durch den Prozessor betrieben werden kann, wobei das Computerprogramm, wenn es durch den Prozessor ausgeführt wird, das Verfahren zum Bereitstellen einer Uplink-Bewilligung nach Anspruch 1 oder 2 ausführt.

14. Basisstation, umfassend: ein zweites Bestimmungsmodul und ein zweites Zuweisungsmodul, wobei
das zweite Bestimmungsmodul zum Bestimmen, gemäß einem Zeitverteilungsmodell, einer Uplink-Bewilligungsübertragungsgelegenheit konfiguriert ist, wobei das Zeitverteilungsmodell zum Repräsentieren von Zeitinformationen konfiguriert ist, wenn ein Endgerät einen Zufallszugriff initiieren muss, nachdem die Basisstation Downlink-Daten überträgt; und
das zweite Zuweisungsmodul zum Zuweisen einer Uplink-Bewilligung an das Endgerät bei der bestimmten Uplink-Bewilligungsübertragungsgelegenheit konfiguriert ist.

15. Basisstation nach Anspruch 14, ferner umfassend ein Trainingsmodul, konfiguriert zum:
Aufzeichnen, innerhalb eines voreingestellten Zyklus, von Bedingungen, dass eine voreingestellte Anzahl von Endgeräten Uplink-Bewilligungen durch Initiieren eines Zufallszugriffs nach dem Empfangen der Downlink-Daten innerhalb der voreingestellten Zeitspanne erhalten, und Erfassen des Zeitverteilungsmodells für das Endgerät, das einen Zufallszugriffsprozess auslöst.

16. Computerlesbares Speichermedium, auf dem computerausführbare Anweisungen gespeichert sind, wobei die computerausführbaren Anweisungen, wenn sie durch einen Prozessor ausgeführt werden, das Verfahren zum Bereitstellen einer Uplink-Bewilligung nach einem der Ansprüche 3 bis 10 ausführen.

17. Vorrichtung zum Bereitstellen einer Uplink-Bewilligung, wobei die Vorrichtung einen Prozessor und einen Speicher umfasst, wobei in dem Speicher ein Computerprogramm gespeichert ist, das durch den Prozessor ausgeführt werden kann, wobei das Computerprogramm, wenn es durch den Prozessor ausgeführt wird, das Verfahren zum Bereitstellen einer Uplink-Bewilligung nach einem der Ansprüche 3 bis 10 ausführt.

## Revendications

1. Procédé pour fournir une autorisation de liaison montante, comprenant les étapes consistant à :
déterminer, par une station de base, qu'un terminal doit envoyer des données de liaison montante ; et
attribuer, par la station de base, une autorisation de liaison montante au terminal avant le point temporel suivant auquel un canal d'accès aléatoire physique à bande étroite, NPRACH, est accédé ;
dans lequel des informations sur un point temporel auquel le NPRACH est accédé sont contenues dans un paramètre de NPRACH configuré pour la station de base par un système de gestion de réseau.

2. Procédé selon la revendication 1, dans lequel l'étape consistant à déterminer, par la station de base, que le terminal doit envoyer les données de liaison montante comprend les étapes consistant à :
envoyer des données de liaison descendante à partir de la station de base et définir une indication d'interrogation au niveau d'un en-tête d'une unité de données de protocole, **PDU,** de couche de contrôle de liaison radio, RLC, pour déterminer que le terminal doit envoyer les données de liaison montante ; ou
déterminer, lorsque la station de base complète une transmission de données de liaison descendante et demande définitivement une réponse au terminal, que le terminal doit envoyer les données de liaison montante.

3. Procédé pour fournir une autorisation de liaison montante, comprenant les étapes consistant à :
déterminer, par une station de base selon un modèle de distribution temporelle, une occasion de transmission d'autorisation de liaison montante, dans lequel le modèle de distribution temporelle est configuré pour représenter des informations temporelles lorsqu'un terminal doit lancer un accès aléatoire après que la station de base a envoyé des données de liaison descendante ; et
attribuer, par la station de base, l'autorisation de liaison montante au terminal à l'occasion de transmission d'autorisation de liaison montante déterminée.

4. Procédé selon la revendication 3, dans lequel, avant l'étape consistant à déterminer, par la station de base selon le modèle de distribution temporelle, l'occasion de transmission d'autorisation de liaison montante, le procédé comprend en outre les étapes consistant à :
enregistrer, par la station de base dans un cycle prédéfini, des conditions dans lesquelles un nombre prédéfini de terminaux obtient des autorisations de liaison montante en lançant un accès aléatoire après avoir reçu les données de liaison descendante dans la période de temps prédéfinie, et acquérir le modèle de distribution temporelle pour que le terminal déclenche un processus d'accès aléatoire.

5. Procédé selon la revendication 3 ou 4, dans lequel le modèle de distribution temporelle représente :
une plage de temps de déclenchement, [temps de déclenchement minimum, minTime, temps de déclenchement maximum, maxTime] pour que le terminal déclenche un accès aléatoire pour acquérir l'autorisation de liaison montante après que la station de base a complété une transmission de données de liaison descendante ;
ou,
des points temporels de déclenchement auxquels le terminal déclenche un accès aléatoire de manière intensive pour acquérir l'autorisation de liaison montante après que la station de base a complété une transmission de données de liaison descendante.

6. Procédé selon la revendication 5, dans lequel l'étape consistant à déterminer, par la station de base selon le modèle de distribution temporelle, l'occasion de transmission d'autorisation de liaison montante, comprend les étapes consistant à :
prendre, par la station de base, le temps qui est représenté par le modèle de distribution temporelle et qui est inférieur au minTime comme occasion de transmission d'autorisation de liaison montante ; ou
prendre, par la station de base, le point temporel de déclenchement déterminé comme occasion de transmission d'autorisation de liaison montante selon le modèle de distribution temporelle.

7. Procédé selon la revendication 4, dans lequel, avant l'étape consistant à acquérir le modèle de distribution temporelle pour que le terminal déclenche le processus d'accès aléatoire, le procédé comprend en outre les étapes consistant à :
attribuer l'autorisation de liaison montante au terminal après que la station de base a complété une transmission de données de liaison descendante et détermine que le terminal doit déclencher un accès aléatoire pour acquérir l'autorisation de liaison montante, et enregistrer une durée pour que le terminal déclenche l'accès aléatoire après que la station de base a complété la transmission de données de liaison descendante.

8. Procédé selon la revendication 5, dans lequel l'étape consistant à attribuer, par la station de base, l'autorisation de liaison montante au terminal à l'occasion de transmission d'autorisation de liaison montante déterminée comprend les étapes consistant à :
attribuer, après que la station de base a complété une transmission de données de liaison descendante, l'autorisation de liaison montante au terminal à un temps inférieur au minTime ; ou,
attribuer, après que la station de base a complété une transmission de données de liaison descendante, l'autorisation de liaison montante au terminal à un point temporel inférieur au point temporel de déclenchement.

9. Procédé selon la revendication 5, dans lequel l'étape consistant à attribuer, par la station de base, l'autorisation de liaison montante au terminal à l'occasion de transmission d'autorisation de liaison montante déterminée comprend les étapes consistant à :
sélectionner, lorsque la station de base configure un canal logique, SR-Prohibit, pour qu'il soit vrai et après que la station de base a complété une transmission de données de liaison descendante, une valeur plus petite du minTime et du paramètre de temporisateur de canal logique, SR-Prohibit, ou sélectionner une valeur plus petite du minTime et un paramètre de temporisateur de retransmission de rapport d'état de tampon, BSR, et attribuer l'autorisation de liaison montante au terminal à tout moment inférieur à la valeur plus petite ;
ou,
sélectionner, lorsque la station de base configure un canal logique, SR-Prohibit, pour qu'il soit vrai et après que la station de base a complété une transmission de données de liaison descendante, une valeur plus petite du point temporel de déclenchement et du paramètre de temporisateur de canal logique, SR-Prohibit, ou sélectionner une valeur plus petite du point temporel de déclenchement et du paramètre de temporisateur de retransmission de BSR, et attribuer l'autorisation de liaison montante au terminal à tout moment inférieur à la valeur plus petite.

10. Procédé selon la revendication 5, dans lequel
attribuer, par la station de base, l'autorisation de liaison montante au terminal à l'occasion de transmission d'autorisation de liaison montante déterminée comprend les étapes consistant à :
attribuer, par la station de base, l'autorisation de liaison montante au terminal par l'intermédiaire d'un canal de contrôle de liaison descendante physique à bande étroite, NPDCCH, transporter un format d'informations de contrôle de liaison descendante, DCI N0, à l'occasion de transmission d'autorisation de liaison montante déterminée ; et après que la station de base a reçu des données de liaison montante envoyées à partir du terminal par l'intermédiaire d'un canal partagé de liaison montante physique à bande étroite, NPUSCH, selon le DCI N0, si le terminal doit encore envoyer les données de liaison montante, le procédé comprend en outre les étapes consistant à :
déterminer, par la station de base selon le modèle de distribution temporelle ou le modèle de distribution temporelle et un paramètre de configuration, qu'une pluralité de terminaux acquièrent des autorisations de liaison montante en lançant un accès aléatoire ; et
attribuer, par la station de base, une autorisation de liaison montante à chacun de la pluralité de terminaux à nouveau à des occasions de transmission d'autorisation de liaison montante déterminées.

11. Station de base, comprenant : un premier module de détermination et un premier module d'attribution, dans laquelle
le premier module de détermination est configuré pour déterminer qu'un terminal doit envoyer des données de liaison montante ; et
le premier module d'attribution est configuré pour attribuer une autorisation de liaison montante au terminal avant le point temporel suivant auquel un canal d'accès aléatoire physique à bande étroite, NPRACH, est accédé ;
dans lequel des informations sur un point temporel auquel le NPRACH est accédé sont contenues dans un paramètre de NPRACH configuré pour la station de base par un système de gestion de réseau.

12. Moyen de stockage lisible par ordinateur sur lequel sont stockées des instructions exécutables par ordinateur, dans lequel les instructions exécutables par ordinateur, lorsqu'elles sont exécutées par un processeur, réalisent le procédé pour fournir une autorisation de liaison montante selon la revendication 1 ou 2.

13. Dispositif pour fournir une autorisation de liaison montante, le dispositif comprenant un processeur et une mémoire, dans lequel la mémoire a stocké sur celle-ci un programme informatique exploitable par le processeur, dans lequel le programme informatique, lorsqu'il est exécuté par le processeur, réalise le procédé pour fournir une autorisation de liaison montante selon la revendication 1 ou 2.

14. Station de base, comprenant : un second module de détermination et un second module d'attribution, dans laquelle
le second module de détermination est configuré pour déterminer, selon un modèle de distribution temporelle, une occasion de transmission d'autorisation de liaison montante, dans laquelle le modèle de distribution temporelle est configuré pour représenter des informations temporelles lorsqu'un terminal doit lancer un accès aléatoire après que la station de base a envoyé des données de liaison descendante ; et
le second module d'attribution est configuré pour attribuer une autorisation de liaison montante au terminal à l'occasion de transmission d'autorisation de liaison montante déterminée.

15. Station de base selon la revendication 14, comprenant en outre un module d'apprentissage configuré pour :
enregistrer dans un cycle prédéfini des conditions dans lesquelles un nombre prédéfini de terminaux obtient des autorisations de liaison montante en lançant un accès aléatoire après avoir reçu les données de liaison descendante dans la période de temps prédéfinie, et acquérir le modèle de distribution temporelle pour que le terminal déclenche un processus d'accès aléatoire.

16. Moyen de stockage lisible par ordinateur sur lequel sont stockées des instructions exécutables par ordinateur, dans lequel les instructions exécutables par ordinateur, lorsqu'elles sont exécutées par un processeur, réalisent le procédé pour fournir une autorisation de liaison montante selon l'une quelconque des revendications 3 à 10.

17. Dispositif pour fournir une autorisation de liaison montante, le dispositif comprenant un processeur et une mémoire, dans lequel la mémoire a stocké sur celle-ci un programme informatique exécutable par le processeur, dans lequel le programme informatique, lorsqu'il est exécuté par le processeur, réalise le procédé pour fournir une autorisation de liaison montante selon l'une quelconque des revendications 3 à 10.
